# EUROPÄISCHE PATENTSCHRIFT

(11) **EP 3 395 744 B1**
(45) Veröffentlichungstag und Bekanntmachung des Hinweises auf die Patenterteilung: **13.05.2020**
(21) Anmeldenummer: 18160670.8
(22) Anmeldetag: 08.03.2018
(51) Int. Cl.: B66C 9/00

(54) **LAUFRAD FÜR EINEN KRAN**
RUNNING WHEEL FOR A CRANE
ROUE POUR UNE GRUE

(30) Priorität: 26.04.2017 AT 1712017
(43) Veröffentlichungstag der Anmeldung: 31.10.2018
(73) Patentinhaber: Hans Künz GmbH, 6971 Hard (Vbg.) (AT)
(72) Erfinder: Klapper, Georg, 6971 Hard (AT)
(74) Vertreter: Fechner, Thomas

(56) Entgegenhaltungen:
- EP-A2- 1 892 169
- DE-A1- 2 944 013
- DE-A1-102010 005 873
- DE-A1-102011 117 444
- GB-A- 1 212 235
- GB-A- 2 052 014
- US-A- 1 377 634
- "DIN 15083:1977-12", December 1977 (1977-12) page w,

## Beschreibung

Die vorliegende Erfindung betrifft ein Laufrad für einen Kran, insbesondere Portalkran, umfassend eine Welle, einen Radkranz und eine, die Welle mit dem Radkranz verdrehfest verbindende Nabe, wobei die Nabe aus Stahl besteht, und zumindest eine Verbindung zwischen der Nabe und der Welle und/oder zwischen der Nabe und dem Radkranz einen Presssitz und einen von einer ersten Anschlagfläche festgelegten ersten Formschluss aufweist, wobei der erste Formschluss eine Relativbewegung der Nabe gegenüber der Welle oder dem Radkranz in einer zu einer Laufraddrehachse des Laufrads parallel verlaufenden ersten Richtung blockiert. Im Weiteren betrifft die Erfindung ein Verfahren zur Herstellung eines derartigen Laufrads und einen Kran mit zumindest einem Laufrad.

Krane, insbesondere Portalkrane, werden zum Transport von Containern oder sonstigen Lasten eingesetzt. Neben dem Heben und Senken, d.h. einer Bewegung in vertikaler Richtung, ist meist auch ein Verstellen von Containern oder sonstigen Lasten in zumindest einer horizontalen Richtung nötig, um die Container bzw. die Last an einem vorbestimmten Platz abzustellen, an Lastkraftwagen zu übergeben, aufeinander zu stapeln, usw. Eine Laufkatze des Krans, auch Krankatze genannt, läuft dabei meist entlang von, auf einem Kranträger eines Krans befestigten, Laufschienen und ermöglicht die Bewegung der Transporteinrichtung in eine erste horizontale Richtung, während der Kran, insbesondere ein schienengebundener Kran, oft als Ganzes auf, beispielsweise auf einem Fundament befestigten, Laufschienen in eine zweite horizontale Richtung verfahrbar ist.

Um die horizontale Verschiebung der Laufkatze bzw. des Krans zu ermöglichen, stützt sich die Laufkatze bzw. der Kran als Ganzes über Laufräder, die eine Lauffläche aufweisen, auf den genannten Laufschienen ab. Die Laufschienen, auf denen sich die Laufkatze abstützt, können auch als Laufkatzenschienen bezeichnet werden. Jene Laufschienen, auf denen sich der Kran als Ganzes abstützt, können auch als Kranschienen bezeichnet werden. Über ein jeweiliges Laufrad zu übertragende Umfangskräfte werden beispielsweise von einem, mit dem Laufrad zusammenwirkenden, Antrieb erzeugt und zur Fortbewegung der Laufkatze bzw. des Kranes mittels Reibschluss auf die Laufschiene übertragen. Die in einer zur Laufraddrehachse parallelen Richtung, welche auch als axiale Richtung des Laufrads bezeichnet werden kann, wirkenden Kräfte werden auch als Seitenkräfte bezeichnet und entstehen im normalen Fahrbetrieb, z.B. aufgrund des Schräglaufs des Krans auf den Laufschienen. Die orthogonal zur Laufraddrehachse verlaufenden Richtungen werden her auch als radiale Richtungen bezeichnet. Im Weiteren wirken noch radiale Kräfte aufgrund des Eigengewichts des Krans und der Laufkatze bzw. des Gewichts der zu hebenden Lasten.

Im Stand der Technik ist es bekannt, das komplette Laufrad materialeinstückig aus einem Rohling herzustellen. Das Laufrad umfasst dann zumindest einen Wellenabschnitt zur Verbindung mit dem Antrieb und die Lauffläche zur Abstützung auf der Laufschiene. Diese Lösung ist jedoch erst bei großen Stückzahlen wirtschaftlich realisierbar, wobei dann die Laufräder günstigerweise mittels Gesenkschmieden oder Gießen hergestellt werden.

Ein Beispiel für ein Kran-Laufrad ist in der GB 2 52 014 A gezeigt. Die Verbindung des aus einem Stück gefertigten Laufrads mit einer Antriebswelle erfolgt mittels einer Pressverbindung, die durch Einpressen von Öl zwischen die Passflächen gelöst werden kann. In der GB 1 212 235 ist ein Laufrad gezeigt, bei dem die Verbindung zwischen einer Antriebswelle und dem Laufrad mittels einer Verzahnung erfolgt.

Im Weiteren ist es bekannt, das Laufrad aus einzelnen Bauteilen, d.h. aus einer Welle, einem Radkranz und einer Nabe zusammenzubauen. Hierzu werden meist Presssitze zur Verbindung der genannten Bauteile angewendet, wobei die zu verbindenden Bauteile hierzu in axialer Richtung, beispielsweise bis zu einem einen Formschluss festlegenden, Absatz, ineinander gepresst werden. Um einen sicheren Presssitz zwischen der Nabe und der Welle und/oder dem Radkranz sicherzustellen, sind entsprechende Übermaße an den jeweiligen Verbindungsstellen vorzusehen, wie sie z.B. in der DIN 15083:1977-12 definiert sind. In der Praxis hat sich herausgestellt, dass durch Wärmebehandlungsprozesse (z.B. Vergütungsvorgänge oder die Oberflächenhärtung der Lauffläche) in Kombination mit dem Aufschrumpfprozess bzw. den benötigten Übermaßen der Presssitze hohe Eigenspannungen in den Laufrädern entstehen können. Diese Eigenspannungen mindern einerseits die Tragfähigkeit des Laufrads, insbesondere des Radkranzes, und setzen gleichzeitig die Verschleißfestigkeit der Oberfläche, insbesondere der Lauffläche des Radkranzes, herab.

Aufgabe der Erfindung ist es daher, ein Laufrad der eingangs genannten Art zur Verfügung zu stellen, bei dem die im Laufrad auftretenden Spannungen gegenüber dem Stand der Technik verringert werden können.

Erfindungsgemäß gelingt dies mit einem Laufrad mit den Merkmalen des Anspruchs 1.

Beim Laufrad gemäß der Erfindung ist somit vorgesehen, dass die Verbindung zusätzlich zumindest einen von einer zweiten Anschlagfläche festgelegten zweiten Formschluss aufweist, wobei der zweite Formschluss die Relativbewegung der Nabe gegenüber der Welle oder dem Radkranz in einer der ersten Richtung entgegengesetzten zweiten Richtung blockiert.

Der Erfindung liegt die Idee zugrunde, den Presssitz im Wesentlichen nur zur Übertragung von Drehmomenten, d.h. der Antriebskräfte die über das Laufrad auf die Laufschiene übertragen werden, auszulegen. Hierzu ist ein wesentlich geringeres Übermaß der zur fügenden Bauteile nötig. Das gegenüber dem Stand der Technik verminderte Übermaß führt dazu, dass die Sicherheit gegen seitliches Abgleiten vermindert wird. D.h. dass bei hohen Seitenkräften ein Abgleiten des Radkranzes von der Nabe oder der Nabe von der Welle möglich wäre. Die erfindungsgemäße Ausführung der Verbindung mit einem zweiten Formschluss ermöglicht es jedoch, die Relativbewegung der Nabe gegenüber der Welle bzw. der Nabe gegenüber dem Radkranz in einer der ersten Richtung entgegengesetzten zweiten Richtung zu verhindern. Dadurch ist es einerseits möglich, eine ausreichende Sicherheit gegen seitliches Abgleiten zu erreichen. Andererseits können entstehende Eigenspannungen infolge von Wärmebehandlungsschritten etc. im Laufrad, aufgrund des im Vergleich zum Stand der Technik verminderten Übermaßes des Presssitzes, verringert werden. Erfindungsgemäße Laufräder weisen deshalb insgesamt höhere Traglasten und Standzeiten auf.

Der Begriff Welle umfasst im Sinne der Erfindung auch Achsen, welche eine reine Trag- oder Lagerfunktion haben, d.h. eine Übertragung von Drehmomenten über das Laufrad auf die Kranschiene ist nicht zwingend.

Der Radkranz könnte im Sinne der Erfindung auch als Radreifen oder Felge bezeichnet werden. Der Radkranz umfasst eine in Umfangrichtung umlaufende Lauffläche, welche sich auf der Laufschiene abstützt.

Auch der Begriff Nabe ist im Sinne der Erfindung weit zu fassen. Die Nabe könnte auch als Steg des Laufrads bezeichnet werden. Die Nabe ist, zumindest in einem Betriebszustand des Laufrads, auf der Welle befestigt. Im Weiteren umgibt der Radkranz die Nabe in radialer Richtung bezogen auf die Laufraddrehachse. In anderen Worten ist der Radkranz an der Außenseite der Nabe befestigt. Die Nabe ist der Verbindungskörper zwischen Welle und Radkranz.

Die Verbindung zwischen der Welle und der Nabe könnte auch als Welle-Nabe-Verbindung bezeichnet werden. Die Verbindung zwischen der Nabe und dem Radkranz könnte man auch als Nabe-Radkranz-Verbindung bezeichnen. Das erfindungsgemäße Laufrad weist somit eine Welle-Nabe-Verbindung und/oder eine Nabe-Radkranz-Verbindung auf. Wenn im Folgenden im Allgemeinen von der "Verbindung" des Laufrads die Rede ist, so kann es sich im Sinne der Erfindung sowohl um eine Welle-Nabe-Verbindung als auch um eine als Nabe-Radkranz-Verbindung des Laufrads handeln.

Unter dem Begriff Presssitz wird im Rahmen dieser Schrift ein Pressverband zwischen zwei Bauteilen, welche mittels Pressfügen miteinander verbunden sind, bezeichnet. Es kann sich beim Presssitz um einen Pressverband handeln, der beispielsweise mittels Längspressfügen oder Querpressfügen hergestellt ist. Im Allgemeinen wird unter einem Presssitz eine kraftschlüssige (bzw. reibschlüssige) Verbindung von zwei Bauteilen verstanden, wobei das Größtmaß einer Bohrung eines ersten Bauteils in jedem Fall kleiner ist, als das Kleinstmaß eines in die Bohrung einzuschiebenden Querschnitts eines zweiten Bauteils. Nach dem Zusammenfügen sind die Bauteile mittels des Presssitzes miteinander verbunden, wobei das übertragbare Drehmoment vom Übermaß, z.B. eines Außendurchmessers der Welle gegenüber einem Innendurchmesser der Nabe, bestimmt ist.

Zur Ausbildung einer Welle-Nabe-Verbindung ist vorzugsweise vorgesehen, dass der Presssitz eine der Laufraddrehachse zugewandte Presssitzinnenfläche der Nabe und eine von der Laufraddrehachse weggewandte Presssitzaußenfläche der Welle miteinander kraftschlüssig verbindet. Die Presssitzinnenfläche der Nabe begrenzt die Nabe im Bereich des Presssitzes, bezogen auf die Laufraddrehachse, in radialer Richtung nach innen. Die Presssitzaußenfläche der Welle begrenzt die Welle im Bereich des Presssitzes, bezogen auf die Laufraddrehachse, in radialer Richtung nach außen. Alternativ oder zusätzlich kann bei einer Nabe-Radkranz-Verbindung vorgesehen sein, dass der Presssitz eine der Laufraddrehachse zugewandte Presssitzinnenfläche des Radkranzes und eine von der Laufraddrehachse weggewandte Presssitzaußenfläche der Nabe miteinander kraftschlüssig verbindet. Die Presssitzinnenfläche des Radkranzes begrenzt den Radkranz im Bereich des Presssitzes, bezogen auf die Laufraddrehachse, in radialer Richtung nach innen. Die Presssitzaußenfläche der Nabe begrenzt die Nabe im Bereich des Presssitzes, bezogen auf die Laufraddrehachse, in radialer Richtung nach außen.

Vorzugsweise ist vorgesehen, dass der Presssitz im Bereich zwischen der ersten Anschlagfläche und der zweiten Anschlagfläche angeordnet ist. Der Presssitz erstreckt sich somit günstigerweise zwischen der ersten Anschlagfläche, die den ersten Formschluss festlegt, und der zweiten Anschlagfläche, die den zweiten Formschluss festlegt. Besonders bevorzugt ist vorgesehen, dass die erste Anschlagfläche und die zweite Anschlagfläche benachbart zum Presssitz angeordnet sind. Die beiden Anschlagflächen selbst bilden aber nicht den Presssitz aus.

Die erste Anschlagfläche und die zweite Anschlagfläche sind günstigerweise orthogonal zur Laufraddrehachse ausgerichtet. Vorzugsweise sind die durch den Presssitz erzeugten Presskräfte der Verbindung in radialer Richtung bezogen auf die Laufraddrehachse ausgerichtet.

In einer möglichen Ausführungsform des Laufrads kann vorgesehen sein, dass die Welle die erste Anschlagfläche und die zweite Anschlagfläche aufweist, und die erste Anschlagfläche und die zweite Anschlagfläche und die Presssitzaußenfläche der Welle miteinander materialeinstückig verbunden sind. Alternativ oder zusätzlich kann vorgesehen sein, dass der Radkranz die erste Anschlagfläche und die zweite Anschlagfläche aufweist, und die erste Anschlagfläche und die zweite Anschlagfläche und die Presssitzinnenfläche des Radkranzes miteinander materialeinstückig verbunden sind. Es kann günstigerweise auch vorgesehen sein, dass der Radkranz als Ganzes einstückig, insbesondere materialeinstückig ausgebildet ist und die erste Anschlagfläche und die zweite Anschlagfläche und die Presssitzinnenfläche und die Lauffläche aufweist.

In einer möglichen Ausführungsvariante einer Welle-Nabe-Verbindung des Laufrads kann vorgesehen sein, dass die Presssitzinnenfläche der Nabe zumindest bereichsweise konisch ist und ein kleinster Innendurchmesser der Presssitzinnenfläche in einem Betriebszustand des Laufrads an die zweite Anschlagfläche der Welle angrenzt. Zum Befestigen des Radkranzes auf der Nabe in einer Nabe-Radkranz-Verbindung kann vorgesehen sein, dass die Presssitzaußenfläche der Nabe zumindest bereichsweise konisch ist und ein größter Außendurchmesser der Presssitzaußenfläche in einem Betriebszustand des Laufrads an die zweite Anschlagfläche des Radkranzes angrenzt.

Günstigerweise ist vorgesehen, dass die Welle und/oder der Radkranz, eine angeformte Einführfase aufweist oder aufweisen, wobei die Einführfase, in eine Richtung parallel zur Laufraddrehachse gesehen, auf einer vom Presssitz abgewandten Seite der zweiten Anschlagfläche angeordnet ist. Mittels einer Einführfase kann auch die Zentrierung der zu fügenden Bauteile erleichtert werden.

In einem Verfahren zur Herstellung eines erfindungsgemäßen Laufrads kann vorgesehen sein, dass die Nabe in der ersten Richtung in den Radkranz hineingeschoben wird, wobei die zweite Anschlagfläche während des Einschiebens der Nabe elastisch verformt wird, und die zweite Anschlagfläche in einem vollständig eingeschobenen Fügezustand, in welchem die Nabe die erste Anschlagfläche berührt, zumindest im Wesentlichen ihre Ursprungsform einnimmt und die den zweiten Formschluss festlegende zweite Anschlagfläche die Relativbewegung der Nabe gegenüber dem Radkranz in der zweiten Richtung blockiert. In anderen Worten kann somit vorgesehen sein, dass das zweite Formschlusselement, welches die zweite Anschlagfläche aufweist, ähnlich einer Schnappverbindung, nach dem Einschieben der Nabe in den Radkranz im Wesentlichen seine Ursprungsform einnimmt und im Weiteren die den zweiten Formschluss festlegende zweite Anschlagfläche das Abgleiten der Nabe vom Radkranz verhindert.

Alternativ oder zusätzlich kann zur Herstellung einer erfindungsgemäßen Verbindung zwischen der Welle und der Nabe vorgesehen sein, dass die Welle in der ersten Richtung in die Nabe eingeschoben wird, wobei die zweite Anschlagfläche während des Einschiebens der Welle elastisch verformt wird, und die zweite Anschlagfläche in einem vollständig eingeschobenen Fügezustand, in welchem die Welle die erste Anschlagfläche berührt, zumindest im Wesentlichen ihre Ursprungsform einnimmt und die den zweiten Formschluss festlegende zweite Anschlagfläche die Relativbewegung der Welle gegenüber der Nabe in der zweiten Richtung blockiert.

In einer anderen möglichen Ausführungsform könnte das Laufrad zumindest eine Sicherungsvorrichtung aufweisen, wobei die zweite Anschlagfläche an der Sicherungsvorrichtung angeordnet ist. In anderen Worten ist somit vorgesehen, dass das Laufrad eine zusätzliche Sicherungsvorrichtung aufweist, welche das Abgleiten der Nabe von der Welle oder vom Radkranz in die zweite Richtung verhindert. Es wäre auch denkbar und möglich, dass auch die erste Anschlagfläche an einer weiteren Sicherungsvorrichtung angeordnet ist.

Günstigerweise ist vorgesehen, dass die zumindest eine Sicherungsvorrichtung ein Sicherungsring ist, welcher, zumindest in einem Betriebszustand des Laufrads, in eine am Radkranz oder an der Welle ausgebildete Nut eingreift. Sicherungsringe sind an sich bekannt und werden u.a. auch als Nutenring bezeichnet.

Bevorzugt ist vorgesehen, dass die Sicherungsvorrichtung, vorzugsweise wieder zerstörungsfrei lösbar, am Radkranz oder an der Welle befestigbar oder befestigt ist.

Alternativ zum Sicherungsring ist es denkbar und möglich, dass die Sicherungsvorrichtung, vorzugsweise zerstörungsfrei, mit Verbindungselementen, vorzugsweise Schrauben, lösbar am Radkranz oder an der Welle befestigbar oder befestigt ist. Die Sicherungsvorrichtung könnte beispielsweise einen Flanschring umfassen, welcher mittels Verbindungselementen am Radkranz oder an der Welle befestigbar oder befestigt ist. Alternativ zu Schrauben könnten auch Nieten oder andere geeignete Verbindungselemente zur Befestigung des Flanschrings vorgesehen sein.

Der Flanschring ist günstigerweise in Umfangrichtung umfangsgeschlossen ausgebildet. Alternativ ist es auch denkbar und möglich, dass die Sicherungsvorrichtung eine Vielzahl von, vorzugsweise wieder zerstörungsfrei, mit Verbindungselementen, vorzugsweise Schrauben, lösbar am Radkranz oder an der Welle befestigbaren oder befestigten Sicherungselementen umfasst, welche jeweils eine zweite Anschlagfläche bilden. Die Vielzahl der, vorzugsweise schraubbaren, Sicherungselemente könnte dann beispielsweise in Umfangsrichtung verteilt angeordnet sein.

Vorzugsweise ist vorgesehen, dass die Lauffläche des Radkranzes einen Durchmesser im Bereich von 300 mm bis 1.200 mm, vorzugsweise von 400 mm und bis 1.000 mm aufweist. Besonders bevorzugt ist vorgesehen, dass der Durchmesser der Lauffläche des Radkranzes im Bereich von 500 mm bis 710 mm liegt. Da der Durchmesser der Lauffläche des Radkranzes ein charakteristisches Maß des Laufrads ist, könnte dieser Durchmesser auch als Laufraddurchmesser bezeichnet werden. Günstigerweise ist vorgesehen, dass die Welle und/oder der Radkranz aus Metall, insbesondere Stahl, besteht oder bestehen.

Es wird an dieser Stelle ausdrücklich festgehalten, dass es sich beim erfindungsgemäßen Laufrad für einen Kran nicht um ein Laufrad für einen Spielzeugkran, Modellkran oder Ähnliches handelt.

Im Weiteren umfasst die Erfindung einen Kran, insbesondere Portalkran, mit zumindest einem Laufrad gemäß der Erfindung. Das erfindungsgemäße Laufrad kann beispielsweise als Laufrad zum Bewegen des Krans entlang von Kranschienen, d.h. als Kranlaufrad, eingesetzt sein. Alternativ oder zusätzlich ist es denkbar und möglich, dass das erfindungsgemäße Laufrad ein Laufrad einer Laufkatze, d.h. ein Laufkatzenlaufrad, eines Krans, insbesondere eines Portalkrans, ist.

Weitere Merkmale und Einzelheiten bevorzugter Ausgestaltungsformen der Erfindung werden anhand der in den Figuren dargestellten Ausführungsbeispiele erfindungsgemäßer Laufräder und eines erfindungsgemäßen Krans erläutert. Es zeigen:
- Fig. 1: einen als Portalkran ausgebildeten Kran mit erfindungsgemäßen Laufrädern;
- Fig. 2: ein erstes Ausführungsbeispiel eines erfindungsgemäßen Laufrads in einer Seitenansicht in Richtung parallel zur Laufraddrehachse gesehen;
- Fig. 3: ein Längsmittenschnitt in einer durch die Längsmittenachse gelegten Schnittebene des Laufrad gemäß Fig. 2, wobei die Welle ungeschnitten dargestellt ist;
- Fig. 4: das Detail A von Fig. 3;
- Fig. 5: die in Fig. 4 dargestellten Komponenten des Laufrads vor dem Zusammenfügen;
- Fig. 6: ein zweites Ausführungsbeispiel eines Laufrads analog zu Fig. 3;
- Fig. 7: das Detail B von Fig. 6;
- Fig. 8: ein drittes Ausführungsbeispiel gemäß der Erfindung analog zu Fig. 2;
- Fig. 9: eine isometrische Ansicht des Laufrads nach Fig. 8 in einer teilweise geschnittenen Darstellung;
- Fig. 10: einen Längsmittenschnitt des Laufrads nach Fig. 8;
- Fig. 11: Detail C von Fig. 10;
- Fig. 12: bis 14 ein viertes Ausführungsbeispiel eines Laufrad gemäß der Erfindung analog zu den Fig. 2 bis 4, wobei Fig. 14 das Detail D der Fig. 13 zeigt;
- Fig. 15: bis 18 ein fünftes Ausführungsbeispiel gemäß der Erfindung analog zu den Fig. 8 bis 11, wobei Fig. 18 das Detail E von Fig. 17 zeigt, und
- Fig. 19: ein sechstes Ausführungsbeispiel eines Laufrads.

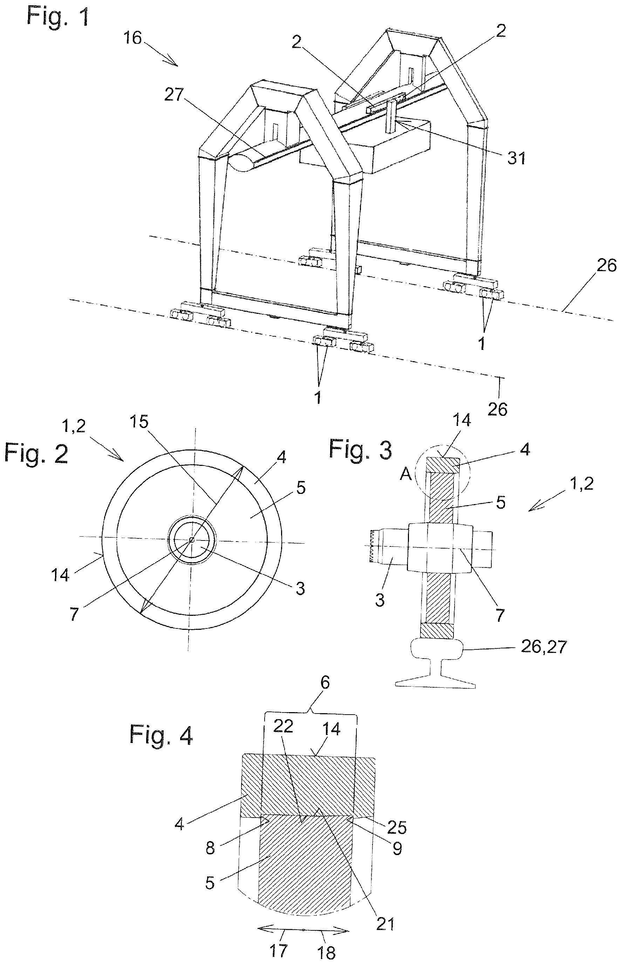

In Fig. 1 ist ein als Portalkran ausgebildeter Kran 16 zum Transport von nicht dargestellten Containern in einem Containerterminal gezeigt. Der Kran 2 ist entlang einer Längserstreckung von Laufschienen 26, insbesondere Kranlaufschienen, horizontal verschiebbar bzw. verfahrbar. In Fig. 1 sind die Laufschienen 26 lediglich mittels strichpunktierter Linien angedeutet. Der Kran 2 stützt sich über Laufräder 1, insbesondere Kranlaufräder, auf den Laufschienen 26 ab.

Im Weiteren umfasst der Portalkran 16 einen nicht näher bezeichneten Kranträger, auf welchem Laufschienen 27 des Krans 2 angeordnet sind. Diese Laufschienen 27 könnten auch als Laufkatzenschienen bezeichnet werden. Eine Laufkatze 31 des Krans 2 ist entlang der Laufschienen 27 in horizontaler Richtung verschiebbar. Die Laufkatze 31 stützt sich über Laufräder 2, auch Laufkatzenlaufräder genannt, auf den Laufschienen 27 ab. In Fig. 1 ist nur eine der beiden Laufschienen 27 dargestellt. In einer alternativen Ausführungsform könnte der Kran 2 auch zwei voneinander beabstandete Kranträger aufweisen, auf welchen jeweils eine der Laufschienen 27 befestigt ist.

Bei den im Folgenden beschriebenen Ausführungsbeispielen handelt es sich um alternative Ausführungsvarianten der Verbindung zwischen einer Welle 3 und einer Nabe 5, also einer Welle-Nabe-Verbindung eines Laufrads 1,2 und/oder zwischen der Nabe 5 und einem Radkranz 4, also einer Nabe-Radkranz-Verbindung eines oder des Laufrads 1,2. Im Folgenden wird auf die Gemeinsamkeiten der gezeigten Ausführungsbeispiele eingegangen.

In den gezeigten Ausführungsbeispielen besteht die Welle 3, wie dies auch bevorzugt ist, aus Stahl. Die Welle 3 könnte z.B. aus unlegiertem oder niedrig legiertem Vergütungsstahl bestehen. Der Vergütungsstahl weist im vergüteten Zustand günstigerweise Zugfestigkeiten zwischen 500 MPa (Megapascal = N/mm²) und 1.000 MPa, auf.

Die Nabe 5 ist ebenfalls aus Stahl gefertigt. Günstigerweise besteht die Nabe aus Baustahl mit Zugfestigkeiten zwischen 350 MPa und 800 MPa. Ein Beispiel für einen geeigneten Werkstoff für die Nabe 5 ist Baustahl S355J2.

Der in den Ausführungsbeispielen verwendete Radkranz 4 ist bevorzugt aus Stahl gefertigt. Günstigerweise besteht der Radkranz 4 aus einem härtbaren, niedrig legierten Vergütungsstahl mit Zugfestigkeiten zwischen 700 MPa und 1.200 MPa. Beispiele für geeignete Werkstoffe für den Radkranz 4 sind 42CrMo4 oder 34CrNiMo6 oder 30CrNiMo8. Es kann vorgesehen sein, dass eine Lauffläche 14 des Radkranzes 4 gehärtet ist. Alternativ kann die Lauffläche 14 auch nur vergütet sein. Ist die Lauffläche 14 des Radkranzes 4 gehärtet ausgeführt, beträgt die Oberflächenhärte der Lauffläche 14 nach Rockwell günstigerweise zumindest 40 HRC und weniger 60 HRC, bevorzugt zumindest 45 HRC und weniger als 55 HRC.

In den Ausführungsbeispielen ist ein Radkranz 4 mit einer kreiszylindrischen Lauffläche 14 dargestellt, d.h. die Lauffläche 14 begrenzt den Radkranz 4 in einer von einer Laufraddrehachse 7 des Laufrads weggewandten radialen Richtung an einem größten Durchmesser 15 des Radkranzes 4. Der Durchmesser 15 der Lauffläche 14 des Radkranzes 4 legt gleichzeitig auch den Laufraddurchmesser des Laufrads 1, 2 fest.

In den Ausführungsbeispielen beträgt der Durchmesser 15 der Lauffläche 14 des Radkranzes 4,630 mm. Auch andere Werte des Durchmessers 15 in Abhängigkeit von erforderlichen Traglasten sind, wie eingangs erwähnt, denkbar und möglich.

Eine Schienenkopfbreite der Laufschiene 26, 27 beträgt günstigerweise zwischen 50 mm und 150 mm, bevorzugt zwischen 75 mm und 120 mm.

Die radiale Traglast erfindungsgemäßer Laufräder 1, 2 liegt günstigerweise im Bereich von 50 kN bis 800 kN. Bei den bevorzugten Durchmessern 15 der Lauffläche 14, d.h. von 500 mm bis 710 mm, liegt die radiale Traglast günstigerweise im Bereich von 200 kN bis 500 kN. Die vom Laufrad 1,2 aufnehmbaren axialen Kräfte, d.h. Seitenkräfte in eine Richtung parallel zur Laufraddrehachse 7, betragen günstigerweise bis zu 20 % der genannten radialen Traglasten.

Anhand der nun folgenden ersten vier Ausführungsbeispiele von erfindungsgemäßen Laufrädern 1,2 wird auf die Details der Verbindung der Nabe 5 mit dem Radkranz 4 eingegangen. In den Ausführungsbeispielen 5 und 6 sind beispielhaft Varianten einer Verbindung der Welle 3 mit der Nabe 5 eines Laufrads 1,2 gezeigt. Es wird an dieser Stelle noch einmal festgehalten, dass ein erfindungsgemäßes Laufrad 1, 2 nur eine der genannten Verbindungen oder beide Verbindungen aufweisen kann.

Im ersten Ausführungsbeispiel gemäß Fig. 2 bis 5 ist ein Laufrad 1,2 gezeigt, welches einen sogenannten Längspressverband aufweist. Ein Längspressverband ist dadurch gekennzeichnet, dass die zu verbindenden Bauteile zur Ausbildung eines Presssitzes im Wesentlichen die gleiche Temperatur aufweisen und "kalt" ineinander geschoben werden.

Zwischen der Nabe 5 und dem Radkranz 4 ist ein Presssitz 6 ausgebildet, d.h. die Nabe 5 und der Radkranz 4 sind mittels des Presssitzes 6 kraftschlüssig miteinander verbunden. Über den Presssitz 6 werden die, bezogen auf eine Laufraddrehachse 7, in radialer und in Umfangsrichtung auftretenden Kräfte während des Betriebs des Krans 16 übertragen.

Zusätzlich zum Presssitz 6 ist vorgesehen, dass die Verbindung zwischen der Nabe 5 und dem Radkranz 4 einen von einer ersten Anschlagfläche 8 festgelegten ersten Formschluss aufweist, wobei der erste Formschluss eine Relativbewegung der Nabe 5 gegenüber dem Radkranz 4 in einer in Laufraddrehachse 7 des Laufrads 1, 2 parallel verlaufenden ersten Richtung 17 blockiert, vgl. Fig. 4. Im Weiteren weist die Verbindung zwischen der Nabe 5 und dem Radkranz 4 eine zweite Anschlagfläche 9 auf, welche den zweiten Formschluss festlegt. Der zweite Formschluss blockiert die Relativbewegung der Nabe 5 gegenüber dem Radkranz 4 in einer der ersten Richtung 17 entgegengesetzten zweiten Richtung 18. Im Ergebnis, d.h. im Betriebszustand des Laufrads 1,2, ist die Relativbewegung der Nabe 5 gegenüber dem Radkranz 4 bezogen auf Richtungen parallel zur Laufraddrehachse 7 unterbunden.

Die erste Anschlagfläche 8 und die zweite Anschlagfläche 9 sind, wie im ersten Ausführungsbeispiel dargestellt, günstigerweise orthogonal zur Laufraddrehachse 7 ausgerichtet.

Der Presssitz 6 der Verbindung ist, wie dies auch bevorzugt ist, im Bereich zwischen der ersten Anschlagfläche 8 und der zweiten Anschlagfläche 9 angeordnet. Die den Presssitz 6 hervorrufenden Presskräfte sind vorzugsweise in radialer Richtung bezogen auf die Laufraddrehachse 7 ausgerichtet. Beim ersten Ausführungsbeispiel erstreckt sich der Presssitz 6 zwischen der ersten Anschlagfläche 8 und der zweiten Anschlagfläche 9. Die erste Anschlagfläche 8 und die zweite Anschlagfläche 9 sind im ersten Ausführungsbeispiel benachbart zum Presssitz 6 angeordnet.

Der Presssitz 6 ist zwischen einer der Laufraddrehachse 7 zugewandten Presssitzinnenfläche 22 des Radkranzes 4 und einer von der Laufraddrehachse 7 weggewandten Presssitzaußenfläche 21 der Nabe 5 kraftschlüssig ausgebildet. Die Presssitzinnenfläche 22 des Radkranzes 4 begrenzt den Radkranz 4 im Bereich des Presssitzes 6 somit, bezogen auf die Laufraddrehachse 7, in radialer Richtung nach innen. Die Presssitzaußenfläche 21 der Nabe 5 begrenzt die Nabe 5 im Bereich des Presssitzes 6, bezogen auf die Laufraddrehachse 7, in radialer Richtung nach außen. Beim ersten Ausführungsbeispiel eines erfindungsgemäßen Laufrads 1,2 ist vorgesehen, dass der Radkranz 4 die erste Anschlagfläche 8 und die zweite Anschlagfläche 9 aufweist. Die erste Anschlagfläche 8 und die zweite Anschlagfläche 9 und die Presssitzinnenfläche 22 des Radkranzes 4 sind miteinander materialeinstückig verbunden. Auch die Lauffläche 14 ist materialeinstückig am Radkranz 4 angeformt, sodass der Radkranz 4 als Ganzes einstückig, insbesondere materialeinstückig, ausgebildet ist. Der Radkranz 4 weist im ersten Ausführungsbeispiel im Weiteren eine angeformte Einführfase 25 auf, welche, in eine Richtung parallel zur Laufraddrehachse 7 gesehen, auf einer vom Presssitz 6 abgewandten Seite der zweiten Anschlagfläche 9 angeordnet ist. Die Einführfase 25 erleichtert das Einschieben der Nabe 5 in den Radkranz 4 und ermöglicht eine Zentrierung der Nabe 5 gegenüber dem Radkranz 4. Im ersten Ausführungsbeispiel ist vorgesehen, dass die Einführfase 25 benachbart zur zweiten Anschlagfläche 9 am Radkranz 4 angeordnet ist.

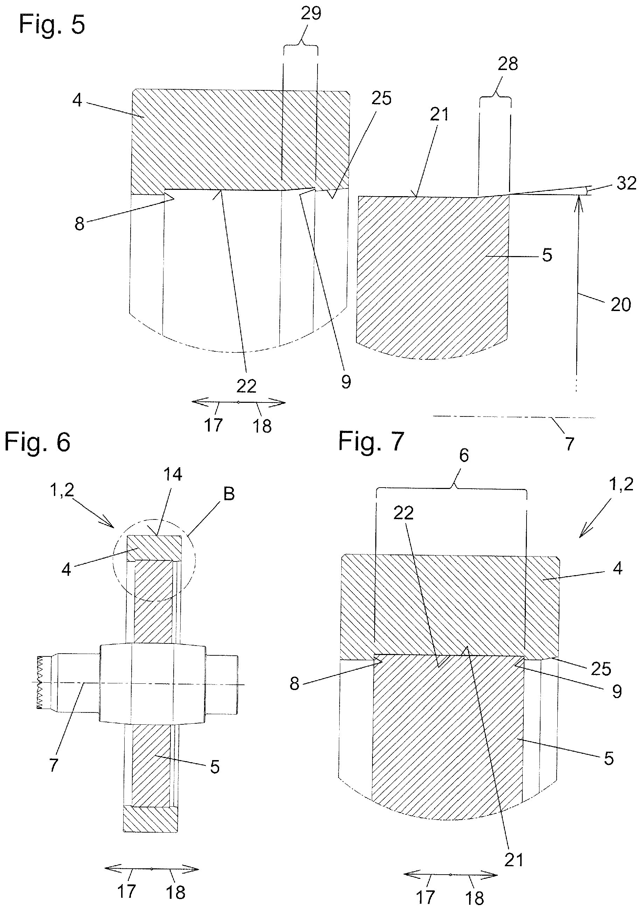

Die Presssitzaußenfläche 21 der Nabe 5 ist im ersten Ausführungsbeispiel bereichsweise konisch, vgl. Fig. 4. Ein größter Außendurchmesser 20 der Presssitzaußenfläche 21 grenzt im Betriebszustand des Laufrads 1, 2 an die zweite Anschlagfläche 9 des Radkranzes 4 an, vgl. Fig. 4 und 5. Der Außendurchmesser 20 wird dabei in radialer Richtung bezogen auf die Laufraddrehachse 7 gemessen. Ein Winkel 32 des Konus 28, d.h. des konischen Bereichs der Presssitzaußenfläche 21, beträgt günstigerweise mehr als 1° und weniger als 10°. Der Winkel 32 beträgt im Ausführungsbeispiel 5°. Die Presssitzinnenfläche 22 des Radkranzes 4 weist einen mit dem Konus 28, zumindest in einem Betriebszustand des Laufrads 1, 2, zusammenwirkenden Innenkonus 29 auf. Der Innenkonus 29 grenzt im Ausführungsbeispiel direkt an die zweite Anschlagfläche 9 des Radkranzes 4 an, vgl. Fig. 5. Abgesehen davon, dass die Presssitzaußenfläche 21 der Nabe 5 im ersten Ausführungsbeispiel bereichsweise konisch ist, ist die übrige Presssitzaußenfläche 21 kreiszylindermantelförmig. Analoges gilt für die Presssitzinnenfläche 22, welche, abgesehen vom Innenkonus 28, kreiszylindermantelförmig ist.

Die Presssitzaußenfläche 21 der Nabe 5 und die Presssitzinnenfläche 22 des Radkranzes 4 verlaufen im ersten Ausführungsbeispiel, wie dies bevorzugt ist, bezogen auf die Laufraddrehachse 7 in Umfangsrichtung umlaufend, d.h. über 360°.

Beim Laufrad 1,2 des ersten Ausführungsbeispiels, also z.B. einem Laufrad 1,2 mit einem Durchmesser 15 der Lauffläche 14 von 630 mm, beträgt ein Übermaß des Presssitzes 6 günstigerweise zwischen 0,2 mm und 0,4 mm. D.h. die Presssitzaußenfläche 21 der Nabe 5 weist einen um das angegebene Übermaß größeren Außendurchmesser auf als die Presssitzinnenfläche 22 des Radkranzes 4. Bei einem vergleichbaren Laufrad nach dem Stand der Technik beträgt das entsprechende Übermaß zwischen 0,6 mm und 1 mm, und ist damit zumindest um den Faktor zwei größer als beim erfindungsgemäßen Laufrad 1, 2. Aufgrund der bedeutenden Reduktion des Übermaßes beim Laufrad 1,2 gemäß der Erfindung, kann die Traglast im Vergleich zum Stand der Technik gesteigert und die Verschleißanfälligkeit des Laufrads 1, 2 erheblich reduziert werden. Im Weiteren reduzieren sich die nötigen Einpresskräfte entsprechend.

Mit Verweis auf die Fig. 4 und 5 wird nun ein erfindungsgemäßes Verfahren zur Herstellung des Laufrads 1, 2 des ersten Ausführungsbeispiels erläutert. Die Nabe 5 des Laufrads 1,2 wird in der ersten Richtung 17 in den Radkranz 4 eingeschoben. Während des Einschiebens der Nabe 5 wird die zweite Anschlagfläche 9 elastisch verformt. D.h., dass die zweite Anschlagfläche 9 während des Einschiebens der Nabe 5 unwirksam ist. In einem vollständig eingeschobenen Fügezustand berührt die Nabe 5 die erste Anschlagfläche 8, vgl. Fig. 4, wobei die zweite Anschlagfläche 9 zumindest im Wesentlichen ihre Ursprungsform einnimmt und den zweiten Formschluss ausbildet und im Weiteren die Relativbewegung der Nabe 5 gegenüber dem Radkranz 4 in der zweiten Richtung 18 blockiert. Mit "im Wesentlichen" ist in diesem Zusammenhang gemeint, dass die zweite Anschlagfläche 9 während des Einschiebens der Nabe 5 in den Radkranz 4 einem geringen Materialabtrag unterworfen sein kann. Wesentlich ist jedoch, dass die den zweiten Formschluss festlegende Anschlagfläche 9 im Fügezustand wirksam ist und die Relativbewegung der Nabe 5 gegenüber dem Radkranz 4 in der zweiten Richtung blockiert. Das Einnehmen der Ursprungsform der zweiten Anschlagfläche 9 könnte auch als ein elastisches Zurückschnappen bezeichnet werden. Wie in der Zusammenschau der Fig. 4 und 5 leicht vorstellbar, liegen der Konus 28 und der Innenkonus 29 im Fügezustand günstigerweise vollflächig aneinander an.

Die Verbindung zwischen der Nabe 5 und dem Radkranz 4 kann wieder gelöst werden, wobei dann beispielsweise der erste Formschluss oder der zweite Formschluss durch Abdrehen entfernt werden kann und die Verbindung durch Auspressen der Nabe 5 aus dem Radkranz 4 gelöst wird. Anschließend könnte wiederum ein neuer Radkranz 4 zur Verbindung mit der Nabe 5 verwendet werden. Dies ermöglicht es beispielsweise, einen verschlissenen Radkranz 4 des Laufrads 1, 2 auszutauschen.

In den Fig. 6 und 7 ist ein zweites Ausführungsbeispiel gezeigt. Der strukturelle Aufbau des Laufrads 1,2 mit Welle 3, Radkranz 4 und Nabe 5 weist zahlreiche Ähnlichkeiten zum ersten Ausführungsbeispiel auf, sodass in den Erläuterungen zum zweiten Ausführungsbeispiel hauptsächlich auf die Unterschiede zum ersten Ausführungsbeispiel hingewiesen wird. Abgesehen von den im Folgenden angeführten Unterschieden gelten die Erläuterungen zum ersten Ausführungsbeispiel auch beim zweiten Ausführungsbeispiel.

Das zweite Ausführungsbeispiel zeigt einen sogenannten Querpressverband. Zur Ausbildung eines Querpressverbandes werden die zu fügenden Bauteile auf unterschiedliche Temperaturen gebracht. Es ist beispielsweise möglich, die Nabe 5 bei Raumtemperatur vorzuhalten und den Radkranz 4 in einem Ölbad so stark zu erwärmen, dass ein Fügen der Nabe 5 in den Radkranz 4 mit einem Fügespiel möglich ist. Durch Abkühlen des Radkranzes 4 erfolgt das Aufschrumpfen des Radkranzes 4 auf die Nabe 5. Die Ausbildung eines Querpressverbands ist im Bereich des Maschinenbaus allgemein bekannt.

Im zweiten Ausführungsbeispiel ist vorgesehen, dass die Presssitzaußenfläche 21 der Nabe 5 kreiszylindermantelförmig ist. Auch die Gegenfläche des Radkranzes 4, d.h. die Presssitzinnenfläche 22 des Radkranzes 4, ist kreiszylindermantelförmig.

Im zweiten Ausführungsbeispiel ist vorgesehen, dass die Einführfase 25 bezogen auf die Laufraddrehachse 7 beabstandet von der zweiten Anschlagfläche 9 angeordnet ist. Dies ist jedoch nicht zwingend. Die Einführfase 25 könnte auch an die Anschlagfläche 9 angrenzen, wie dies im ersten Ausführungsbeispiel gezeigt ist.

Das Verfahren zur Herstellung des Laufrads 1,2 gemäß des zweiten Ausführungsbeispiels kann grundsätzlich analog zum oben beschriebenen Verfahren zur Herstellung des Laufrads 1,2 gemäß des ersten Ausführungsbeispiels erfolgen. Zusätzlich erfolgt vor dem Einschieben der Nabe 5 in den Radkranz 4 günstigerweise ein Erwärmen des Radkranzes 4 oder ein Abkühlen der Nabe 5. Während des Einschiebens der Nabe 5 in den Radkranz 4 ist auch beim zweiten Ausführungsbeispiel vorgesehen, dass die zweite Anschlagfläche 9 unwirksam ist. In einem vollständig eingeschobenen Fügezustand berührt die Nabe 5 die erste Anschlagfläche 8, vgl. Fig. 4, wobei der zweite Formschluss zumindest im Wesentlichen seine Ursprungsform einnimmt und die den zweiten Formschluss festlegende zweite Anschlagfläche 9 im Weiteren die Relativbewegung der Nabe 5 gegenüber dem Radkranz 4 in der zweiten Richtung 18 blockiert. Das Lösen der Verbindung kann analog zum ersten Ausführungsbeispiel erfolgen. Unterstützend könnte der Radkranz 4 vor dem Ausschieben der Nabe 5 erwärmt werden.

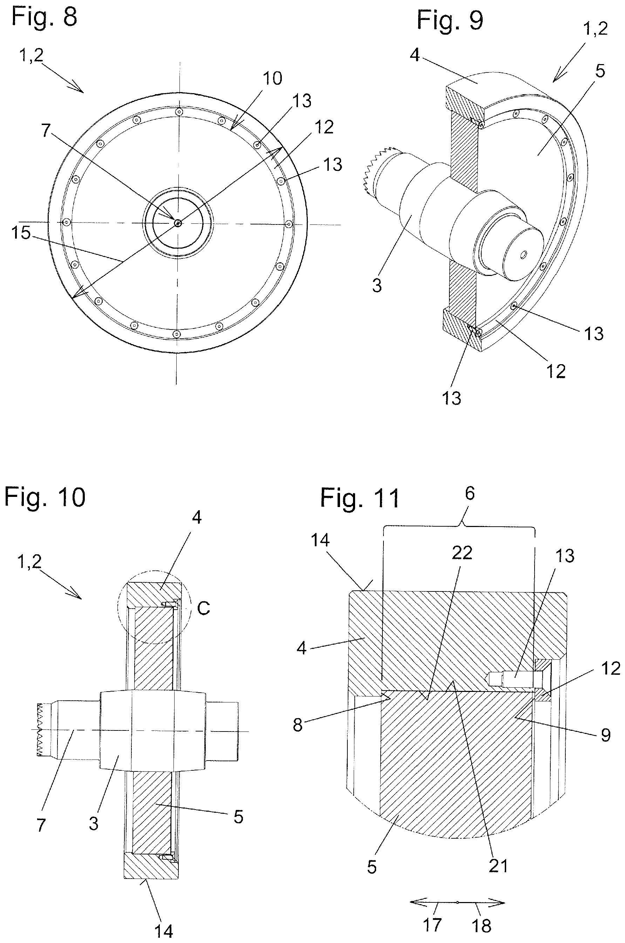

In den Fig. 8 bis 11 ist ein drittes Ausführungsbeispiel eines Laufrads 1,2 gemäß der Erfindung dargestellt. Abgesehen von den im Folgenden angeführten Unterschieden gelten die Erläuterungen zum ersten und zweiten Ausführungsbeispiel auch beim dritten Ausführungsbeispiel.

Auch bei dem in Fig. 8 bis 11 gezeigten Laufrad 1,2 ist vorgesehen, dass die Verbindung einen von einer zweiten Anschlagfläche 9 festgelegten zweiten Formschluss aufweist, der die Relativbewegung der Nabe 5 gegenüber dem Radkranz 4 in einer der ersten Richtung 17 entgegengesetzten zweiten Richtung 18 blockiert. Der Presssitz 6 gemäß dem dritten Ausführungsbeispiel kann als Längspressverband oder als Querpressverband ausgeführt werden. Analog zum zweiten Ausführungsbeispiel sind die Presssitzaußenfläche 21 der Nabe 5 und die Presssitzinnenfläche 22 des Radkranzes 4 kreiszylindermantelförmig, vgl. Fig. 11.

Im Unterschied zu den zuvor genannten Ausführungsbeispielen ist beim Laufrad 1, 2 gemäß des dritten Ausführungsbeispiels vorgesehen, dass dieses eine zusätzliche bzw. separate Sicherungsvorrichtung 10 aufweist, wobei die zweite Anschlagfläche 9 an der Sicherungsvorrichtung 10 angeordnet ist.

Im dritten Ausführungsbeispiel ist vorgesehen, dass die Sicherungsvorrichtung 10 einen in Umfangsrichtung umlaufend ausgebildeten Flanschring 12 umfasst, der die Anschlagfläche 9 aufweist. Die Sicherungsvorrichtung 10 weist im Weiteren Verbindungselemente, insbesondere Schrauben 13, zum Befestigen des Flanschrings 12 am Radkranz 4 auf. Dadurch ist es möglich, dass die Sicherungsvorrichtung 10 wieder zerstörungsfrei lösbar am Radkranz 4 befestigt werden kann.

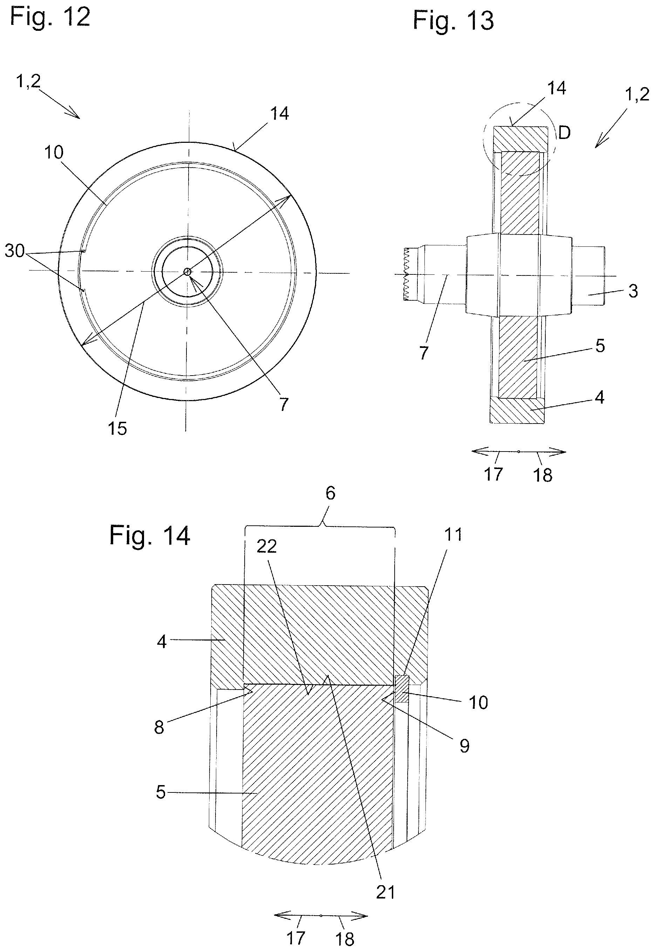

In den Fig. 12 bis 14 ist eine alternative Ausführungsform eines Laufrads 1,2 mit einer Sicherungsvorrichtung 10 gezeigt. Hinsichtlich der Ausführung des Presssitzes 6 wird auf die Erläuterungen zu den oben angeführten Ausführungsbeispielen verwiesen. Auch beim vierten Ausführungsbeispiel kann ein Längs- oder Querpressverband zur Ausbildung des Presssitzes realisiert werden.

Das Laufrad 1, 2 des vierten Ausführungsbeispiels weist eine als Sicherungsring ausgeführte Sicherungsvorrichtung 10 auf. Derartige Sicherungsringe werden auch als Nutenring bezeichnet. Am Radkranz 4 ist hierzu günstigerweise eine Nut 11 eingeformt, vgl. Fig. 14. Zumindest im Betriebszustand des Laufrads 1,2 ist vorgesehen, dass der Sicherungsring in die am Radkranz 4 ausgebildete Nut 11 eingreift. Die als Sicherungsring ausgebildete Sicherungsvorrichtung 10 gemäß dem vierten Ausführungsbeispiel weist die zweite Anschlagfläche 9 auf.

Der Sicherungsring ist in einfacher Weise wieder zerstörungsfrei lösbar am Radkranz 4 befestigbar. Im gezeigten Ausführungsbeispiel weist der Sicherungsring als Durchgangsbohrungen ausgeführte Montagehilfen 30 auf, die eine Montage des Sicherungsrings mit handelsüblichem Werkzeug ermöglichen, siehe Fig. 12. Der Sicherungsring kann zum Montieren und Demontieren, wie an sich bekannt, elastisch deformiert werden, wobei sich bei der elastischen Deformation der äußere Umfang des Sicherungsrings verringert, sodass er in die Nut 11 eingeführt oder aus dieser entnommen werden kann.

Im Unterschied zu den ersten beiden Ausführungsbeispielen ist beim dritten und vierten Ausführungsbeispiel vorgesehen, dass der zweite Formschluss erst durch Befestigen der Sicherungsvorrichtung 10 am Radkranz 4 festgelegt wird.

Grundsätzlich sind alle in den ersten vier Ausführungsbeispielen dargestellten Verbindungen zwischen der Nabe 5 und dem Radkranz 4 auch auf die Verbindung zwischen der Welle 3 und der Nabe 5, also auf eine Welle-Nabe-Verbindung, übertragbar. Insbesondere kann auch eine die zweite Anschlagfläche aufweisende Sicherungsvorrichtung 10 bei der Verbindung zwischen der Welle 3 und der Nabe 5 vorgesehen sein. Auf eine gesonderte Darstellung dieser Ausführungsformen wurde verzichtet. Dem Fachmann ist jedoch klar, dass eine als Sicherungsring ausgeführte Sicherungsvorrichtung 10 dann in eine an der Welle 3 ausgebildete Nut eingreift, bzw. eine Sicherungsvorrichtung 10, welche einen Flanschring aufweist, an der Welle 3 befestigbar oder befestigt ist.

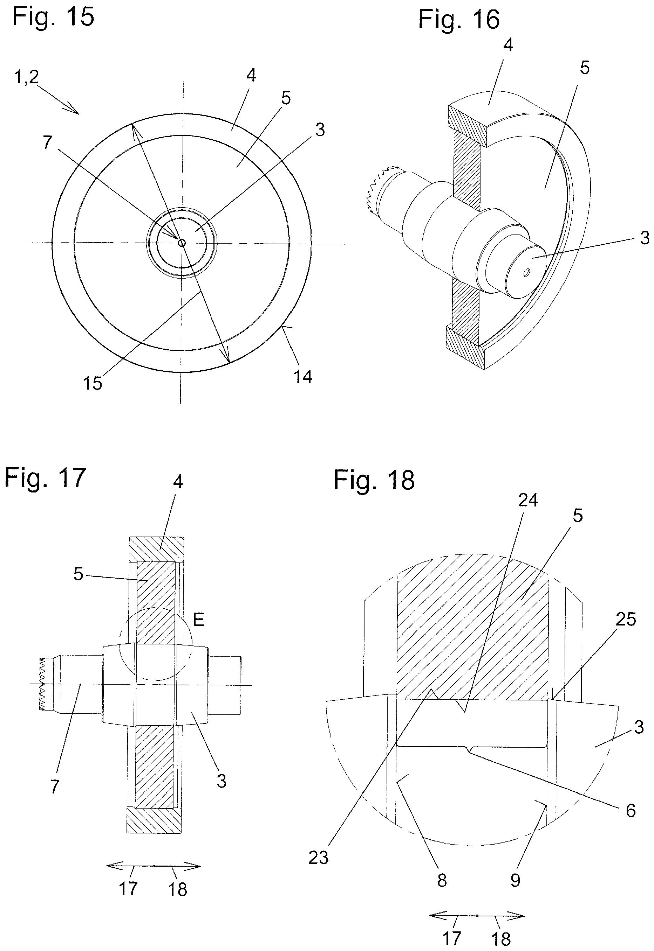

In den Fig. 15 bis 18 ist ein fünftes Ausführungsbeispiel eines Laufrads 1,2 gemäß der Erfindung dargestellt. Abgesehen von den im Folgenden angeführten Unterschieden gelten die Erläuterungen zu den vorangegangenen Ausführungsbeispielen, insbesondere zum zweiten Ausführungsbeispiel, auch beim fünften Ausführungsbeispiel. In den Fig. 15 bis 18 ist ein Beispiel für einen Querpressverband zur Ausbildung eines Presssitzes 6 zwischen einer Welle 3 und einer Nabe 5 gezeigt.

Beim fünften Ausführungsbeispiel gemäß der Erfindung ist vorgesehen, dass der Presssitz 6 eine der Laufraddrehachse 7 zugewandte Presssitzinnenfläche 24 der Nabe 5 und eine von der Laufraddrehachse 7 weggewandte Presssitzaußenfläche 23 der Welle 3 miteinander kraftschlüssig verbindet, vgl. Fig. 17 und 18. Die Welle 3 weist dabei die erste Anschlagfläche 8 und die zweite Anschlagfläche 9 auf. Die erste Anschlagfläche 8 und die zweite Anschlagfläche 9 und die Presssitzaußenfläche 23 der Welle 3 sind miteinander materialeinstückig verbunden.

Die Presssitzinnenfläche 24 der Nabe 5 ist kreiszylindermantelförmig ausgebildet. Gleiches gilt für die Presssitzaußenfläche 23 der Welle 3. Die Welle 3 weist in diesem Ausführungsbeispiel eine Einführfase 25 analog zum ersten und zweiten Ausführungsbeispiel auf, wobei die Einführfase 25 an die Welle 3 angeformt ist. Die Einführfase 25 ist in einer Richtung parallel zur Laufraddrehachse 7 gesehen, auf einer vom Presssitz 6 abgewandten Seite der zweiten Anschlagfläche 9 angeordnet, vgl. Fig. 18.

Die Verbindung zwischen der Welle 3 und der Nabe 5 weist einen von der ersten Anschlagfläche 8 festgelegten ersten Formschluss auf, wobei der erste Formschluss die Relativbewegung der Welle 3 gegenüber der Nabe 5 in einer zur Laufraddrehachse 7 des Laufrads 1, 2 parallel verlaufenden ersten Richtung 17 blockiert, vgl. Fig. 18. Im Weiteren weist die Verbindung zwischen der Welle 3 und der Nabe 5 die zweite Anschlagfläche 9 auf, welche den zweiten Formschluss festlegt. Der zweite Formschluss blockiert die Relativbewegung der Welle 3 gegenüber der Nabe 5 in einer der ersten Richtung 17 entgegengesetzten zweiten Richtung 18. Im Ergebnis ist die Relativbewegung der Welle 3 gegenüber der Nabe 5 gegenüber bezogen auf Richtungen parallel zur Laufraddrehachse 7 unterbunden.

Bei einem Verfahren zur Herstellung eines Laufrads 1, 2 nach dem fünften Ausführungsbeispiel kann vorgesehen sein, dass die Welle 3 in der ersten Richtung 17 in die Nabe 5 eingeschoben wird, wobei die zweite Anschlagfläche 9 während des Einschiebens der Welle 3 elastisch verformt wird, und die zweite Anschlagfläche 9 zur Ausbildung des zweiten Formschlusses in einem vollständig eingeschobenen Fügezustand, in welchem die Welle 3 die erste Anschlagfläche 8 berührt, zumindest im Wesentlichen ihre Ursprungsform einnimmt und somit die Relativbewegung der Welle 3 gegenüber der Nabe 5 in der zweiten Richtung 18 blockiert.

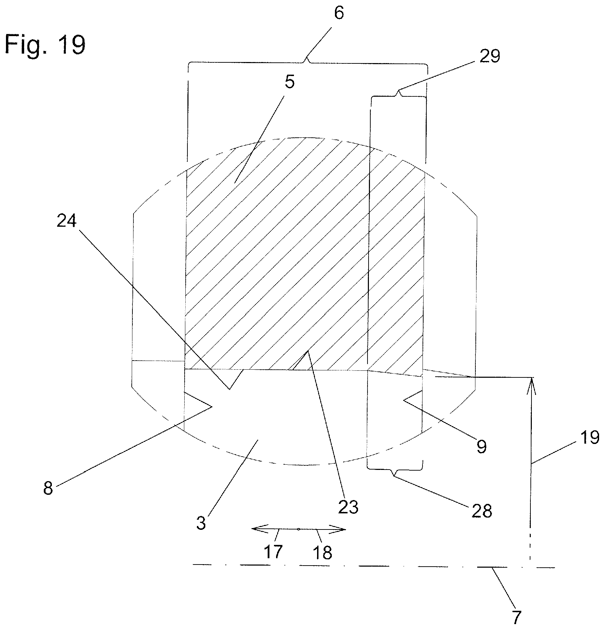

In Fig. 19 ist eine weitere alternative Ausführungsform eines Laufrads 1,2 gemäß der Erfindung dargestellt. Der Presssitz 6 ist hier als Längspressverband realisiert und entspricht im Wesentlichen der Übertragung des Längspressverbandes des ersten Ausführungsbeispiels auf die Verbindung zwischen der Welle 3 und der Nabe 5. Abgesehen von den im Folgenden angeführten Unterschieden gelten die Erläuterungen zu den vorangegangenen Ausführungsbeispielen, insbesondere zum fünften Ausführungsbeispiel, auch beim sechsten Ausführungsbeispiel.

Die Presssitzinnenfläche 24 der Nabe 5 des sechsten Ausführungsbeispiels einer Laufrads 1,2 ist zumindest bereichsweise konisch. D.h., die Presssitzinnenfläche 24 der Welle 3 ist bereichsweise als Innenkonus 29 ausgebildet, vgl. Fig. 19. Ein kleinster Innendurchmesser 19 der Presssitzinnenfläche 24 grenzt in einem Betriebszustand des Laufrads 1,2 an die zweite Anschlagfläche 9 der Welle 3 an. Der kleinste Innendurchmesser 19 der Presssitzinnenfläche 24 ist, bezogen auf die Laufraddrehachse 7, in radialer Richtung zu messen. Die Welle 3 weist die entsprechende Gegenkontur auf, d.h. einen Konus 28, welcher an die zweite Anschlagfläche 9 angrenzt.

Abweichend von den in den Figuren dargestellten Ausführungsbeispielen von Laufrädern 1,2 mit kreiszylindrischer Lauffläche 14 ist es auch denkbar und möglich, dass der Radkranz 4 eines erfindungsgemäßen Laufrads 1,2 eine umlaufende Nut aufweist. Die die Nut, bezogen auf eine Richtung parallel zu einer Laufraddrehachse 7 gesehen, begrenzenden Flanken werden allgemein auch als Spurkräne bezeichnet. Auch Ausführungen von Laufrädern mit nur einem Spurkranz sind im Rahmen der Erfindung denkbar und möglich.

**Legende zu den Hinweisziffern:**

| | | | |
|---|---|---|---|
| 1 | Laufrad | 17 | erste Richtung |
| 2 | Laufrad | 18 | zweite Richtung |
| 3 | Welle | 19 | Innendurchmesser |
| 4 | Radkranz | 20 | Außendurchmesser |
| 5 | Nabe | 21 | Presssitzaußenfläche |
| 6 | Presssitz | 22 | Presssitzinnenfläche |
| 7 | Laufraddrehachse | 23 | Presssitzaußenfläche |
| 8 | erste Anschlagfläche | 24 | Presssitzinnenfläche |
| 9 | zweite Anschlagfläche | 25 | Einführfase |
| 10 | Sicherungsvorrichtung | 26 | Laufschiene |
| 11 | Nut | 27 | Laufschiene |
| 12 | Flanschring | 28 | Konus |
| 13 | Schraube | 29 | Innenkonus |
| 14 | Lauffläche | 30 | Montagehilfe |
| 15 | Durchmesser | 31 | Laufkatze |
| 16 | Kran | 32 | Winkel |

## Patentansprüche

1. Laufrad (1,2) für einen Kran (16), insbesondere Portalkran, umfassend eine Welle (3), einen Radkranz (4) und eine, die Welle (3) mit dem Radkranz (4) verdrehfest verbindende Nabe (5), wobei die Nabe (5) aus Stahl besteht, und zumindest eine Verbindung zwischen der Nabe (5) und der Welle (3) und/oder zwischen der Nabe (5) und dem Radkranz (4) einen Presssitz (6) und einen von einer ersten Anschlagfläche (8) festgelegten ersten Formschluss aufweist, wobei der erste Formschluss eine Relativbewegung der Nabe (5) gegenüber der Welle (3) oder dem Radkranz (4) in einer zu einer Laufraddrehachse (7) des Laufrads (1, 2) parallel verlaufenden ersten Richtung (17) blockiert, **dadurch gekennzeichnet, dass** die Verbindung zusätzlich zumindest einen von einer zweiten Anschlagfläche (9) festgelegten zweiten Formschluss aufweist, wobei der zweite Formschluss die Relativbewegung der Nabe (5) gegenüber der Welle (3) oder dem Radkranz (4) in einer der ersten Richtung (17) entgegengesetzten zweiten Richtung (18) blockiert.

2. Laufrad (1, 2) nach Anspruch 1, **dadurch gekennzeichnet, dass** der Presssitz (6) im Bereich zwischen der ersten Anschlagfläche (8) und der zweiten Anschlagfläche (9) angeordnet ist.

3. Laufrad (1, 2) nach Anspruch 1 oder 2, **dadurch gekennzeichnet, dass** der Presssitz (6) eine der Laufraddrehachse (7) zugewandte Presssitzinnenfläche (24) der Nabe (5) und eine von der Laufraddrehachse (7) weggewandte Presssitzaußenfläche (23) der Welle (3) miteinander kraftschlüssig verbindet, oder dass der Presssitz (6) eine der Laufraddrehachse (7) zugewandte Presssitzinnenfläche (22) des Radkranzes (4) und eine von der Laufraddrehachse (7) weggewandte Presssitzaußenfläche (21) der Nabe (5) miteinander kraftschlüssig verbindet.

4. Laufrad (1, 2) nach Anspruch 3, **dadurch gekennzeichnet, dass** die Welle (3) die erste Anschlagfläche (8) und die zweite Anschlagfläche (9) aufweist, und die erste Anschlagfläche (8) und die zweite Anschlagfläche (9) und die Presssitzaußenfläche (23) der Welle (3) miteinander materialeinstückig verbunden sind, und/oder dass der Radkranz (4) die erste Anschlagfläche (8) und die zweite Anschlagfläche (9) aufweist, und die erste Anschlagfläche (8) und die zweite Anschlagfläche (9) und die Presssitzinnenfläche (22) des Radkranzes (4) miteinander materialeinstückig verbunden sind.

5. Laufrad (1,2) nach Anspruch 4, **dadurch gekennzeichnet, dass** die Presssitzinnenfläche (24) der Nabe (5) zumindest bereichsweise konisch ist und ein kleinster Innendurchmesser (19) der Presssitzinnenfläche (24) in einem Betriebszustand des Laufrads (1, 2) an die zweite Anschlagfläche (9) der Welle (3) angrenzt und/oder dass die Presssitzaußenfläche (21) der Nabe (5) zumindest bereichsweise konisch ist und ein größter Außendurchmesser (20) der Presssitzaußenfläche (21) in einem Betriebszustand des Laufrads (1, 2) an die zweite Anschlagfläche (9) des Radkranzes (4) angrenzt.

6. Laufrad (1, 2) nach einem der Ansprüche 1 bis 5, **dadurch gekennzeichnet, dass** die Welle (3) und/oder der Radkranz (4), eine angeformte Einführfase (25) aufweist oder aufweisen, wobei die Einführfase (25) auf einer vom Presssitz (6) abgewandten Seite der zweiten Anschlagfläche (9) angeordnet ist.

7. Laufrad (1,2) nach einem der Ansprüche 1 bis 3, **dadurch gekennzeichnet, dass** das Laufrad (1,2) zumindest eine Sicherungsvorrichtung (10) aufweist, wobei die zweite Anschlagfläche (9) an der Sicherungsvorrichtung (10) angeordnet ist.

8. Laufrad (1, 2) nach Anspruch 7, **dadurch gekennzeichnet, dass** die zumindest eine Sicherungsvorrichtung (10) ein Sicherungsring ist, welcher in eine am Radkranz (4) oder an der Welle (3) ausgebildete Nut (11) eingreift und/oder dass die Sicherungsvorrichtung (10), vorzugsweise wieder zerstörungsfrei, mit Verbindungselementen, vorzugsweise Schrauben (13), lösbar am Radkranz (4) oder an der Welle (3) befestigbar oder befestigt ist.

9. Verfahren zur Herstellung eines Laufrads (1, 2) nach einem der Ansprüche 1 bis 6, **dadurch gekennzeichnet, dass** die Nabe (5) in der ersten Richtung (17) in den Radkranz (4) eingeschoben wird, wobei die zweite Anschlagfläche (9) während des Einschiebens der Nabe (5) elastisch verformt wird, und die zweite Anschlagfläche (9) in einem vollständig eingeschobenen Fügezustand, in welchem die Nabe (5) die erste Anschlagfläche (8) berührt, zumindest im Wesentlichen ihre Ursprungsform einnimmt und die den zweiten Formschluss festlegende zweite Anschlagfläche (9) die Relativbewegung der Nabe (5) gegenüber dem Radkranz (4) in der zweiten Richtung (18) blockiert, und/oder dass die Welle (3) in der ersten Richtung (17) in die Nabe (5) eingeschoben wird, wobei die zweite Anschlagfläche (9) während des Einschiebens der Welle (3) elastisch verformt wird, und die zweite Anschlagfläche (9) in einem vollständig eingeschobenen Fügezustand, in welchem die Welle (3) die erste Anschlagfläche (8) berührt, zumindest im Wesentlichen ihre Ursprungsform einnimmt und die den zweiten Formschluss festlegende zweite Anschlagfläche (9) die Relativbewegung der Welle (3) gegenüber der Nabe (5) in der zweiten Richtung (18) blockiert.

10. Kran (16), insbesondere Portalkran, mit zumindest einem Laufrad, **dadurch gekennzeichnet, dass** das Laufrad ein Laufrad (1, 2) nach einem der Ansprüche 1 bis 8 ist.

## Claims

1. A running wheel (1, 2) for a crane (16), in particular a gantry crane, comprising a shaft (3), a wheel rim (4) and a hub (5), connecting the shaft (3) to the wheel rim (4) in a rotationally-fixed manner, wherein the hub (5) is made of steel, and at least one connection between the hub (5) and the shaft (3) and/or between the hub (5) and the wheel rim (4) has a force fit (6) and a first form lock determined by a first stop face (8), wherein the first form fit blocks a relative motion of the hub (5) with respect to the shaft (3) or the wheel rim (4) in a first direction (17) running parallel to a running wheel rotational axis (7) of the running wheel (1,2), **characterised in that** the connection additionally has at least one second form lock determined by a second stop face (9), wherein the second form lock blocks the relative motion of the hub (5) with respect to the shaft (3) or the wheel rim (4) in a second direction (18) contrary to the first direction (17).

2. A running wheel (1, 2) according to claim 1, **characterised in that** the press fit (6) is arranged in the region between the first stop face (8) and the second stop face (9).

3. A running wheel (1, 2) according to claim 1 or 2, **characterised in that** a press fit inner surface (24), facing the running wheel rotational axis (7), of the hub (5) and a press fit outer surface (23), facing away from the running wheel rotational axis (7), of the shaft (3) are connected to one another in a force-locked manner by the press fit (6), or **in that** a press fit inner surface (22), facing the running wheel rotational axis (7), of the wheel rim (4) and a press fit outer surface (21), facing away from the running wheel rotational axis (7), of the hub (5) are connected to one another in a force-locked manner by the press fit (6).

4. A running wheel (1, 2) according to claim 3, **characterized in that** the shaft (3) has the first stop face (8) and the second stop face (9), and the first stop face (8) and the second stop face (9) and the press fit outer surface (23) of the shaft (3) are connected to one another as one piece of material, and/or **in that** the wheel rim (4) has the first stop face (8) and the second stop face (9), and the first stop face (8) and the second stop face (9) and the press fit inner surface (22) of the wheel rim (4) are connected to one another as one piece of material.

5. A running wheel (1, 2) according to claim 4, **characterized in that** at least regions of the press fit inner surface (24) of the hub (5) are conical and a smallest inner diameter (19) of the press fit inner surface (24) adjoins the second stop face (9) of the shaft (3) in an operating state of the running wheel (1, 2) and/or **in that** at least regions of the press fit outer surface (21) of the hub (5) are conical and a largest outer diameter (20) of the press fit outer surface (21) adjoins the second stop face (9) of the wheel rim (4) in an operating state of the running wheel (1,2).

6. A running wheel (1, 2) according to any one of claims 1 to 5, **characterized in that** the shaft (3) and/or the wheel rim (4) has/have an integrally formed insertion chamfer (25), wherein the insertion chamfer (25) is arranged on a side, remote from the press fit (6), of the second stop face (9).

7. A running wheel (1, 2) according to any one of claims 1 to 3, **characterized in that** the running wheel (1, 2) has at least one securing device (10), wherein the second stop face (9) is arranged at the securing device (10).

8. A running wheel (1, 2) according to claim 7, **characterized in that** the at least one securing device (10) is a securing ring which engages a groove (11) formed in the wheel rim (4) or in the shaft (3) and/or **in that** the securing device (10) is securable or secured to the wheel rim (4) or to the shaft (3) by means of connecting elements, preferably screws (13), preferably so as to be detachable again in a non-destructive manner.

9. A method of manufacturing a running wheel (1, 2) according to any one of claims 1 to 6, **characterized in that** the hub (5) is pushed into the wheel rim (4) in the first direction (17), wherein the second stop face (9) is elastically deformed during pushing-in of the hub (5), and the second stop face (9) assumes at least substantially its original form in a completely pushed-in joining state in which the hub (5) contacts the first stop face (8), and the second stop face (9) determining the second form lock blocks the relative motion of the hub (5) relative to the wheel rim (4) in the second direction, and/or **in that** the shaft (3) is pushed into the hub (5) in the first direction (17), wherein the second stop face (9) is elastically deformed during the pushing-in of the shaft (3), and the second stop face (9) assumes at least substantially its original form in a completely pushed-in joining state in which the shaft (3) contacts the first stop face (8), and the second stop face (9) determining the second form lock blocks the relative motion of the shaft (3) relative to the hub (5) in the second direction (18).

10. A crane (16), in particular a gantry crane, having at least one running wheel, **characterized in that** the running wheel is a running wheel (1, 2) according to any one of claims 1 to 8.

## Revendications

1. Roue (1, 2) pour une grue (16), en particulier grue à portique, comprenant un arbre (3), une jante de roue (4), et un moyeu (5) reliant fixe en rotation l'arbre (3) à la jante de roue (4), dans laquelle le moyeu (5) est en acier, et au moins une liaison entre le moyeu (5) et l'arbre (3) et/ou entre le moyeu (5) et la jante de roue (4) présente un ajustement serré (6) et un premier assemblage par complémentarité de forme défini par une première surface de butée (8), dans laquelle le premier assemblage par complémentarité de forme bloque un mouvement relatif du moyeu (5) par rapport à l'arbre (3) ou à la jante de roue (4) dans une première direction (17) s'étendant parallèlement à un axe de rotation de roue (7) de la roue (1, 2), **caractérisée en ce que** la liaison présente en outre au moins un deuxième assemblage par complémentarité de forme défini par une deuxième surface de butée (9), dans laquelle le deuxième assemblage par complémentarité de forme bloque le mouvement relatif du moyeu (5) par rapport à l'arbre (3) ou à la jante de roue (4) dans une deuxième direction (18) opposée à la première direction (17).

2. Roue (1, 2) selon la revendication 1, **caractérisée en ce que** l'ajustement serré (6) est agencé dans la zone entre la première surface de butée (8) et la deuxième surface de butée (9).

3. Roue (1, 2) selon la revendication 1 ou 2, **caractérisée en ce que** l'ajustement serré (6) relie par force l'une à l'autre une surface intérieure d'ajustement serré (24) du moyeu (5) tournée vers l'axe de rotation de roue (7) et une surface extérieure d'ajustement serré (23) de l'arbre (3) opposée à l'axe de rotation de roue (7), ou que l'ajustement serré (6) relie par force l'une à l'autre une surface intérieure d'ajustement serré (22) de la jante de roue (4) tournée vers l'axe de rotation de roue (7) et une surface extérieure d'ajustement serré (21) du moyeu (5) opposée à l'axe de rotation de roue (7).

4. Roue (1, 2) selon la revendication 3, **caractérisée en ce que** l'arbre (3) présente la première surface de butée (8) et la deuxième surface de butée (9), et la première surface de butée (8) et la deuxième surface de butée (9) et la surface extérieure d'ajustement serré (23) de l'arbre (3) sont reliées l'une à l'autre d'un seul tenant de matériau, et/ou que la jante de roue (4) présente la première surface de butée (8) et la deuxième surface de butée (9), et la première surface de butée (8) et la deuxième surface de butée (9) et la surface intérieure d'ajustement serré (22) de la jante de roue (4) sont reliées l'une à l'autre d'un seul tenant de matériau.

5. Roue (1, 2) selon la revendication 4, **caractérisée en ce que** la surface intérieure d'ajustement serré (24) du moyeu (5) est conique au moins par zone et un plus petit diamètre intérieur (19) de la surface intérieure d'ajustement serré (24) est adjacent dans un état de fonctionnement de la roue (1, 2) à la deuxième surface de butée (9) de l'arbre (3) et/ou que la surface extérieure d'ajustement serré (21) du moyeu (5) est conique au moins par zone et un plus grand diamètre extérieur (20) de la surface extérieure d'ajustement serré (21) est adjacent dans un état de fonctionnement de la roue (1, 2) à la deuxième surface de butée (9) de la jante de roue (4).

6. Roue (1, 2) selon l'une quelconque des revendications 1 à 5, **caractérisée en ce que** l'arbre (3) et/ou la jante de roue (4) présente ou présentent un chanfrein d'introduction (25) rapporté, dans laquelle le chanfrein d'introduction (25) est agencé sur un côté de la deuxième surface de butée (9) opposé à l'ajustement serré (6) .

7. Roue (1, 2) selon l'une quelconque des revendications 1 à 3, **caractérisée en ce que** la roue (1, 2) présente au moins un dispositif de fixation (10), dans laquelle la deuxième surface de butée (9) est agencée au niveau du dispositif de fixation (10).

8. Roue (1, 2) selon la revendication 7, **caractérisée en ce que** l'au moins un dispositif de fixation (10) est une bague de blocage, laquelle entre en prise dans une rainure (11) formée au niveau de la jante de roue (4) ou au niveau de l'arbre (3) et/ou que le dispositif de fixation (10) peut être fixé ou est fixé, de préférence à nouveau sans destruction, avec des éléments de liaison, de préférence des vis (13), de manière amovible au niveau de la jante de roue (4) ou au niveau de la roue (3).

9. Procédé de fabrication d'une roue (1, 2) selon l'une quelconque des revendications 1 à 6, **caractérisé en ce que** le moyeu (5) est inséré dans la première direction (17) dans la jante de roue (4), dans lequel la deuxième surface de butée (9) est déformée élastiquement pendant l'insertion du moyeu (5), et la deuxième surface de butée (9) adopte dans un état d'assemblage entièrement inséré, dans lequel le moyeu (5) touche la première surface de butée (8), au moins sensiblement sa forme d'origine et la deuxième surface de butée (9) définissant le deuxième assemblage par complémentarité de forme bloque le mouvement relatif du moyeu (5) par rapport à la jante de roue (4) dans la deuxième direction (18), et/ou que l'arbre (3) est inséré dans la première direction (17) dans le moyeu (5), dans lequel la deuxième surface de butée (9) est déformée élastiquement pendant l'insertion de l'arbre (3), et la deuxième surface de butée (9) adopte dans un état d'assemblage entièrement inséré, dans lequel l'arbre (3) touche la première surface de butée (8), au moins sensiblement sa forme d'origine et la deuxième surface de butée (9) définissant le deuxième assemblage par complémentarité de forme bloque le mouvement relatif de l'arbre (3) par rapport au moyeu (5) dans la deuxième direction (18).

10. Grue (16), en particulier grue à portique, avec au moins une roue, **caractérisée en ce que** la roue est une roue (1, 2) selon l'une quelconque des revendications 1 à 8.
